Europäisches Patentamt

European Patent Office

Office européen des brevets

(19)

(11) Veröffentlichungsnummer: **0 372 003 B1**

# EUROPÄISCHE PATENTSCHRIFT

(12)

(45) Veröffentlichungstag der Patentschrift:
26.06.91 Patentblatt 91/26

(51) Int. Cl.⁵: **B01D 53/18**, F28F 25/08

(21) Anmeldenummer: 88909312.6

(22) Anmeldetag: 19.10.88

(86) Internationale Anmeldenummer:
PCT/EP88/00939

(87) Internationale Veröffentlichungsnummer:
WO 89/03719 05.05.89 Gazette 89/10

(54) EINBAUELEMENT FÜR EINE STOFF- UND WÄRMEAUSTAUSCHKOLONNE.

(30) Priorität: 23.10.87 DE 3735923

(43) Veröffentlichungstag der Anmeldung:
13.06.90 Patentblatt 90/24

(45) Bekanntmachung des Hinweises auf die
Patenterteilung:
26.06.91 Patentblatt 91/26

(84) Benannte Vertragsstaaten:
BE CH DE FR GB IT LI NL SE

(56) Entgegenhaltungen:
EP-A- 0 070 915
EP-A- 0 070 916
EP-A- 0 070 917

(73) Patentinhaber: Linde Aktiengesellschaft
Abraham-Lincoln-Strasse 21
W-6200 Wiesbaden (DE)

(72) Erfinder: MOLL, Anton
Sölberstrasse 14
W-8121 Raisting (DE)

(74) Vertreter: Schaefer, Gerhard, Dr.
Linde Aktiengesellschaft Zentrale
Patentabteilung
W-8023 Höllriegelskreuth (DE)

EP 0 372 003 B1

## Beschreibung

Die erfindung betrifft ein Einbauelement für eine Stoff- und Wärmeaustauschkolonne mit mindestens einer zick-zack-förmigen Lage aus aneinander angrenzenden und in zweierlei Vorzugsrichtungen geneigten Leitflächen, bei dem die Lage aus Grundelementen zusammengesetzt ist, die sich oberhalb und unterhalb der Mittelebene der Lage erstrecken.

In Wärme- und Stoffaustauschkolonnen, insbesondere Rektifikationskolonnen und Absorptionskolonnen, wird eine von oben nach unten ablaufende Flüssigkeit in Kontakt mit einem aufsteigenden Gasstrom gebracht. Um einen intensiven Kontakt zwischen den beiden Strömen herzustellen, sind in der Kolonne Einbauelemente vorgesehen, die die Aufgabe haben, die Flüssigkeit möglichst gleichmäßig über den Kolonnenquerschnitt zu verteilen.

Ein bekanntes Einbauelement (EP-A-72 875) besteht aus mehreren Lagen, wobei jede Lage ein zick-zack-förmiges zusammenhängendes Gebilde ist und aneinander angrenzende und miteinander verbundene Reihen von Leitflächen aufweist. Jede zweite Leitfläche einer Leitflächenreihe ragt aus den Flankenebenen der Zacken heraus.

Allerdings müssen die Lagen eines derartigen Einbauelements aufgrund der relativ schmalen Verbindungsstege zwischen den einzelnen Leitflächen große Wandstärken besitzen, damit eine ausreichenden Stabilität gewährleistet ist. Große Wandstärken erhöhen jedoch die Herstellungskosten und das Gewicht und verringern den für den Stoff- und Wärmeaustausch zur Verfügung stehenden Kolonnenquerschnitt.

Der erfindung liegt daher die Aufgabe zugrunde, ein Einbauelement der eingangs genannten Art zu entwickeln, das bei hoher Stabilität eine gleichmäßige Verteilung der herablaufenden Flüssigkeit und des aufsteigenden Gases über den Kolonnenquerschnitt gewährleistet und das preisgünstig hergestellt ist.

Diese Aufgabe wird erfindungsgemäß dadurch gelöst, daß jedes Grundelement mit drei ihm benachbarten Grundelementen verbunden ist, von denen eines dieselbe Vorzugsrichtung wie das Grundelement, die beiden anderen die andere Vorzugsrichtung aufweisen, und daß die Grundelemente, die in Richtung des Kammverlaufs der Zick-Zack-Anordnungen nebeneinander liegen, jeweils unterschiedliche Vorzugsrichtungen aufweisen.

Das erfindungsgemäße Einbauelement besitzt Grundelemente, die vorspringende Dächer oder Klaffen mit zumindest einem freien Rand bilden bzw. aufweisen und die Flüssigkeit an ein benachbartes Grundelement abtropfen lassen, auf dem die Flüssigkeit eine andere Richtung erhält. Die Anordnung bewirkt eine Aufspaltung des herablaufenden Flüssigkeitsstroms in Teilströme, die sich von Grundelement zu Grundelement teilen, teilweise wieder vermischen und Ihre Strömungsrichtung ändern. Auf diese Weise wird die Flüssigkeit gleichmäßig über den Kolonnenquerschnitt verteilt und die erreichte Gleichverteilung auch über große Strömungswege hinweg aufrechterhalten. Durch die von Reihe zu Reihe versetzt übereinander angeordneten Grundelemente entseht eine offene Struktur, die einen geringen Strömungswiderstand besitzt. Durch die gleichmäßige Flüssigkeitsverteilung können die Einbauelemente große Einbauhöhen aufweisen.

Bei einer bevorzugten Weiterbildung des Erfindungsgegenstandes sind die Grundelemente zwischen 30 und 60°, vorzugsweise ca. 45° gegenüber der Mittelebene der Lage geneigt.

Bei einer bevorzugten Weiterbildung des Erfindungsgegenstandes ist die Lage parallel zur Achse der Kolonne angeordnet und sind die Kämme der Zick-Zack-Anordnung zwischen 30 und 90° gegenüber der Achse geneigt.

Eine besondere günstige Art der Herstellung ergibt sich, wenn gemäß einer Weiterbildung des Erfindungsgegenstandes die Lage spiralförmig gewickelt ist.

Die Lage ist vorzugsweise aus einem entsprechenden gestanzten und gefalteten Band, insbesondere Blechband, gefertigt. Das Band wird auf eine Wickelachse, die vorzugsweise mit der kolonnenachse zusammenfällt, aufgewickelt.

Bei einer bevorzugten Weiterbildung des Erfindungsgegenstandes ist jedes Grundelement von sechs Nachbargrundelementen umgeben.

Hierbei ist es insbesondere von Vorteil, wenn senkrecht zum Kammverlauf nebeneinanderliegende Grundelemente um eine halbe Länge versetzt gegeneinander sind.

Bei einer anderen bevorzugten Weiterbildung des Erfindungsgegenstandes ist jedes Grundelement von fünf Nachbargrundelementen umgeben.

Mit Vorteil weist zumindest ein Teil der Grundelemente ein von seiner Oberfläche vorspringendes Dach auf.

Das Dach erstreckt sich gemäß einer bevorzugten Weiterbildung des Erfindungsgegenstandes über die gesamte Ereite eines Grundelements.

Es erweist sich als zweckmäßig, wenn gemäß einer Weiterbildung des Erfindungsgegenstandes das Dach in eine der beiden Vorzugsrichtungen weist.

Bei einer bevorzugten Weiterbildung des Erfindungsgegenstandes besitzt das Dach eine rechteckige Grundfläche.

Bei einer bevorzugten Weiterbildung des Erfindungsgegenstandes ist senkrecht zum Kammverlauf abwechselnd jeweils eine Reihe von Grundelementen mit Dächern und eine Reihe von Grundelementen ohne Dächer vorgesehen.

Bei einer vorteilhaften Ausgestaltung des Erfindungsgegenstandes erstreckt sich das Dach über mehr als die halbe Länge eines Grundelements.

Bei einer anderen vorteilhaften Ausgestaltung des Erfindungsgegenstandes erstreckt sich das Dach über weniger als die halbe Länge eines Grundelements und ist asymmetrisch auf dem Grundelement angeordnet.

Die Erfindung sowie weitere Einzelheiten der Erfindung werden anhand von schematisch dargestellten Ausführungsbeispielen näher erläutert.

Hierbei zeigen :

Figur 1    Eine Teilansicht einer Lage eines erfindungsgemäßen Einbauelements

Figur 2    eine Schnittdarstellung einer Lage gemäß Figur 1

Figur 3    eine weitere Ausführungsform einer Lage

Figur 4    eine Schnittdarstellung der Lage gemäß Figur 3

Figur 5    eine weitere Ausführungsform einer Lage

Figur 6    eine Schnittdarstellung der Lage gemäß Figur 5.

Figur 7    eine Kolonne mit einem erfindungsgemäßen Einbauelement.

In den Figuren sind für analoge Bauteile dieselben Bezugszeichen verwendet.

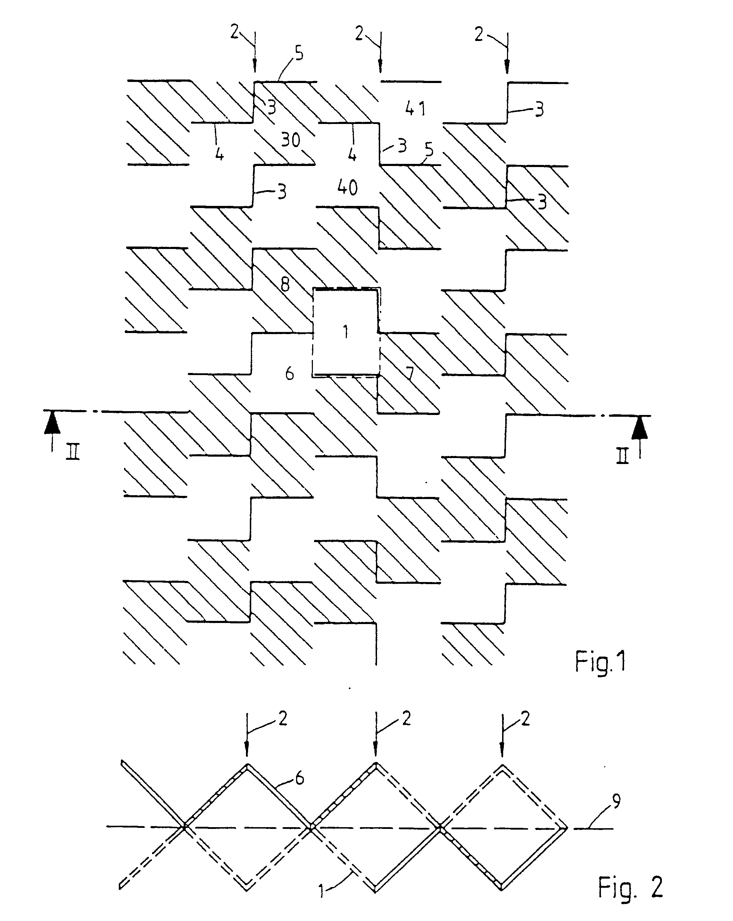

Die Lage gemäß Figur 1 ist durch einen zick-zack-förmigen Streifen gebildet, der vorzugsweise aus Blech besteht. Die Lage ist aus einer Vielzahl von gleich großen rechteckigen Grundelementen 1 aufgebaut, die in zweierlei Vorzugsrichtungen geneigt sind. Das Grundelement 1 ist durch eine gestrichelte Umrandung hervorgehoben. Die in der einen Vorzugsrichtung geneigten Grundelemente 1 sind schraffiert, die in der anderen Vorzugsrichtungen geneigten Grundelemente sind unschraffiert dargestellt. Die zick-zack-förmige Lage weist Kämme auf, deren Lage durch Pfeile 2 gekennzeichnet ist. Entlang der Kämme weist die Lage in gleichmäßigen Abständen Einschnitte 3 auf. Von den beiden Enden der Einschnitte 3 und im rechten Winkel zu diesen führt jeweils ein weiterer Einschnitt 4, 5 senkrecht zum Kammverlauf bis zur Mitte zwischen zwei benachbarten Kämmen. Die Einschnitte 4, 5 weisen in entgegengesetzte Richtungen. Jedes Grundelement 1 ist mit drei benachbarten Grundelementen 6, 7, 8 verbunden. Mit einem der benachbarten Grundelemente 7 ist das Grundelement 1 zwischen zwei Einschnitten 3 über den Kammverlauf hinweg verbunden. An seiner gegenüberliegenden Seite ist das Grundelement 1 mit den benachbarten Grundelementen 6, 8 verbunden, wobei das Grundelement 6 dieselbe Vorzugsrichtung wie das Grundelement 1 aufweist, während das Grundelement 8, ebenso wie das Grundelement 7 in die andere Richtung weist. Diejenigen Grundelemente, die in Richtung des Kammverlaufs gesehen neben dem Grundelement 1 liegen, weisen jeweils eine andere Vorzugsrichtung als dieses auf.

Jeweils zwei Schnittkanten an einer Außenecke eines Grundelementes begrenzen Vorsprünge, die im folgenden als Dächer bezeichnet werden. Als Beispiele dafür seien die Grundelemente 30, 40 und 41 in Figur 1 aufgeführt : Beim schraffiert eingezeichneten Element 30 sind dies die Schnittkanten 3 und 5. Ein Dacher am Element 40 wird durch die Schnittkanten 3 und 4 begrenzt, eines am Element 41 durch die Kanten 3 und 5.

Ein aus einer oder mehreren Lagen der beschriebenen Art zusammengesetztes Einbauelement wird derart in eine Wärme- oder Stoffaustauschkolonne eingebaut, daß zwischen der Kolonnenachse und der Richtung des Kammverlaufs ein Winkel zwischen 30 und 90°, vorzugsweise 30 bis 60° eingeschlossen ist. Die vorspringenden Dächer ermöglichen ein Abtropfen der in der Kolonne herablaufenden Flüssigkeit von einer Lage auf eine benachbarte Lage, d.h. einen Flüssigkeitstransport quer zur Lage.

Wie der Schnittdarstellung gemäß Figur 2 zu entnehmen ist, ist die Vorzugsrichtung der Grundelemente jeweils un ca. 45° gegenüber der Mittelebene 9 geneigt. Die Körperkanten der hinter der Schnittebene liegenden Grundelemente sind übersichtlicherer Darstellung halber gestrichelt dargestellt.

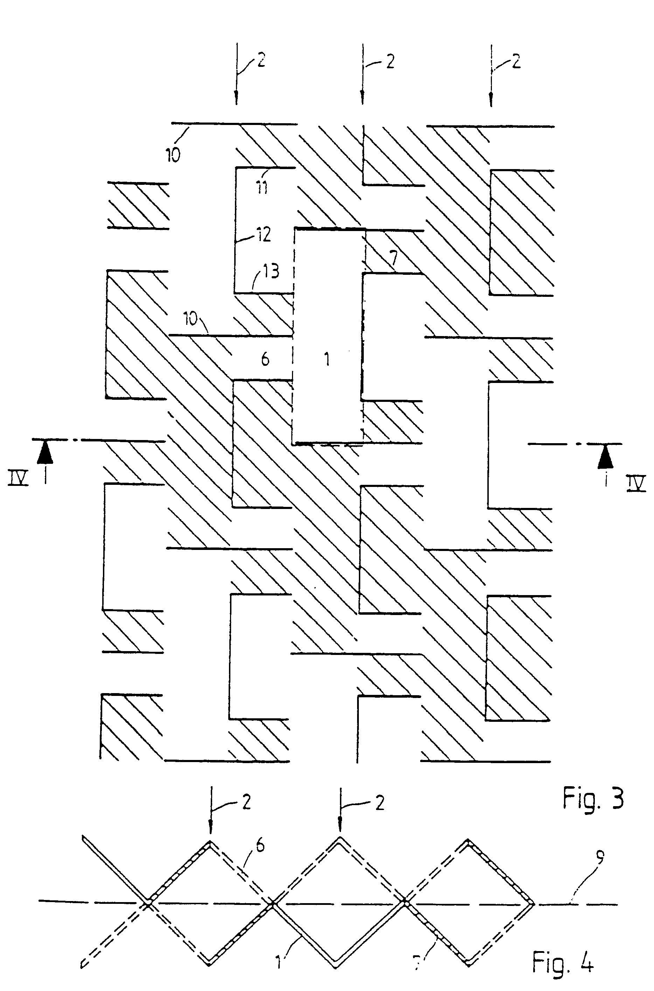

Figur 3 zeigt eine weitere Ausführungsform einer Lage. Die zick-zack-förmige Struktur mit dem durch die Pfeile 2 markierten Kammverlauf weist quer zum Kammverlauf Einschnitte 10 auf, deren Länge dem Abstand zweier benachbarter Kämme entspricht und die sich symmetrisch links und rechts eines jeden Kamms erstrecken. Der Abstand zweier benachbarter Einschnitte 10 entspricht der Länge eines Grundelements. Die Einschnitte 10 quer zu benachbarten Kämmen sind um die halbe Länge eines Grundelements gegeneinander versetzt. Die Breite eines Grundelements 1 entspricht der halben Länge eines Einschnitts 10. Jedes Grundelement erstreckt sich zwischen dem Kamm und der Mittelebene 9 der Lage.

Jedes Grundelement 1 ist mit drei benachbarten Grundelementen 6, 7, 8 verbunden. Die Grundelemente sind in zweierlei Vorzugsrichtungen geneigt, wobei die Grundelemente, die in die eine Vorzugsrichtung zeigen, schraffiert, die Grundelemente, die in die andere Vorzugsrichtung zeigen, unschraffiert dargestellt sind.

Eines der dem Grundelement 1 benachbarten Grundelemente 7 ist neben diesem auf der anderen Seite

3

des Kamms angeordnet und weist die andere Vorzugsrichtung als das Grundelement 1 auf. Die beiden anderen, mit dem Grundelement 1 verbundenen Grundelemente 6, 8 sind jeweils um eine halbe Länge eines Grundelements gegenüber dem Grundelement 1 versetzt. Dabei weist eines der Nachbargrundelemente 6 dieselbe Vorzugsrichtung wie das Grundelement 1, das andere Nachbargrundelement 8 die andere Vorzugsrichtung auf.

In jeder zweiten Reihe von Grundelementen, d.h. Grundelementen, die in Richtung des Kammverlaufs gesehen nebeneinander liegen, ist jedes Grundelement (in der Figur sind dies u.a. die Grundelemente 7, 6, 8) mit drei Einschnitten 11, 12, 13 versehen. Der Einschnitt 12 erstreckt sich entlang des Kammverlaufs über einen Teil der Längskante des Grundelements, die beiden Einschnitte 11, 13 erstrecken sich jeweils von einem Ende des Einschnitts 12 senkrecht zu diesem über die gesamte Breite des Grundelements. Die durch die Einschnitte 11, 12, 13 begrenzte Teilfläche des Grundelements ist aus der Vorzugsrichtung, die das Grundelements besitzt, herausgebogen und vorzugsweise in die andere der beiden Vorzugsrichtungen geneigt. Die beiden Vorzugsrichtungen sind mit Vorteil um jeweils 45° gegen die Mittelebene 9 der Lage geneigt.

Die Lage ist derart in einer Kolonne angeordnet, daß zwischen den Kämmen und der Kolonnenachse ein Winkel zwischen 30 und 90° gebildet ist.

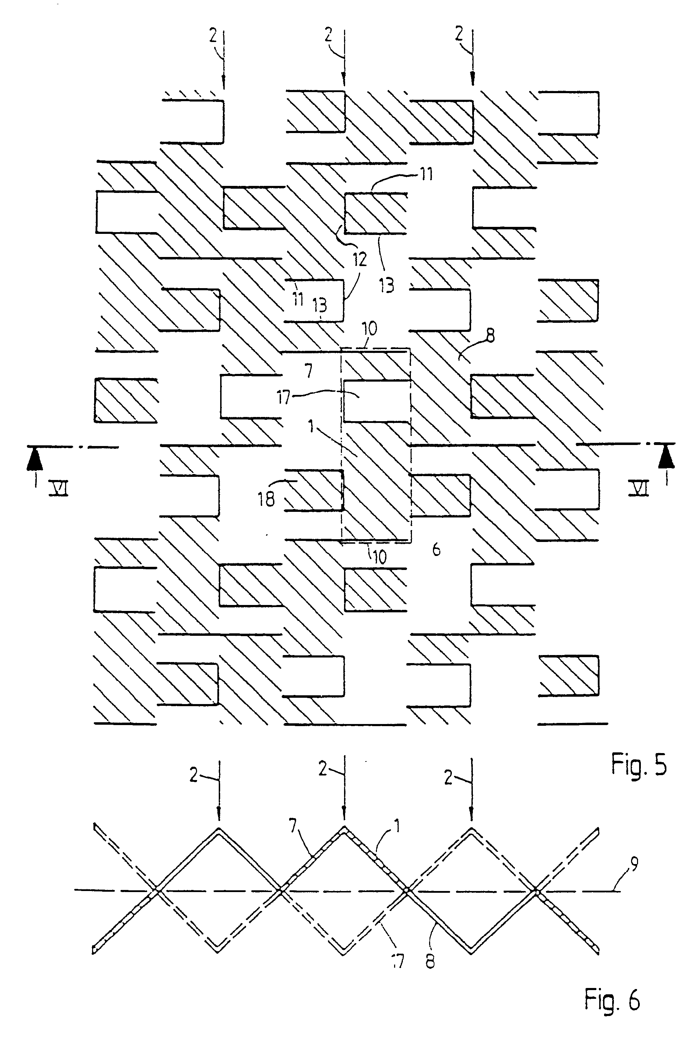

Die Figuren 5 und 6 zeigen eine Ausführungsform einer Lage, bei der Grundelemente in gleicher Weise wie bei der Lage gemäß Figur 3 angeordnet sind. Im Unterschied hierzu sind jedoch die Einschnitte 11, 12, 13 nicht symmetrisch zur Mittellinie des Grundelements angeordnet, und der Schnitt 12 erstreckt sich über weniger als die halbe Länge des Grundelements. Außerdem sind die Einschnitte 11, 12, 13 in jedem der Grundelemente, und nicht nur in jedem Grundelement jeder zweiten Reihe von Grundelementen angeordnet.

Die Einschnitte 12 sind entlang der Kämme der Lage vorgesehen, und zwar sind zwischen jeweils zwei Einschnitten 10 zwei mit Abstand zueinander angeordnete Schnitte 12 vorgesehen.

Von den beiden Enden jedes Einschnitts 12 führen rechtwinklig dazu in die gleiche Richtung weisende Einschnitte 11, 13, die sich bis zur Mitte zwischen zwei benachbarten Kämmen erstrecken. Die Einschnitte 11, 13, die jeweils zwei zwischen zwei Einschnitten 10 befindlichen Einschnitten 12 zugeordnet sind, erstrecken sich in entgegengesetzten Richtungen. Durch die Einschnitte 11, 12, 13 wird eine Teilfläche eines Grundelements begrenzt, die entlang der Linie, die sich zwischen den beiden freien Enden der Schnitte 11, 13 erstreckt, aus der durch das Grundelement definierten Ebene herausgebogen ist. Vorzugsweise sind die Teilflächen in die andere der beiden Vorzugsrichtungen als das Grundelement geneigt.

Die anhand der Figuren 1 bis 6 beschriebenen Lagen können sowohl einzeln als auch in Kombination mit weiteren Lagen als Einbauelemente für Soff- und Wärmeaustauschkolonnen eingesetzt werden. Beispielsweise können mehrere Lagen parallel zueinander sandwichartig aufeinandergelegt zu einem Einbauelement zusammengefügt sein. Hierbei können entweder jeweils Lagen derselben Bauart oder auch Kombinationen von Lagen unterschiedlicher Bauart gebildet werden. Die Lagen können so aufeinandergefügt sein, daß ihre Kämme parallel zueinander gerichtet sind, oder daß die Kämme einzelner Lagen oder einzelner Gruppen von Lagen in unterschiedliche Richtungen weisen. Als Randbedingung ist zu beachten, daß zwischen der Richtung der Kämme und der Kolonnenachse ein Winkel zwischen 30 und 90° gebildet ist. Die Lagen können bei Bedarf anstatt mit glatter mit geriffelter Oberfläche versehen sein.

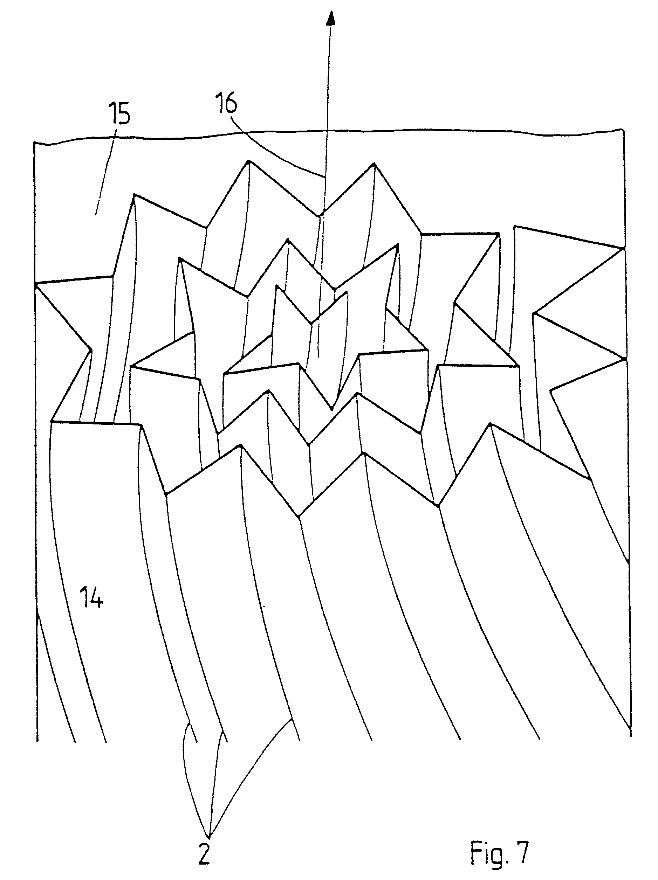

Bei einer in Figur 7 schematisch dargestellten bevorzugten Ausführungsform des Erfindungsgegenstandes ist eine Lage von ausreichender Länge spiralförmig aufgewickelt und das auf diese Weise gebildete Einbauelement 14 in eine Kolonne eingesetzt, wobei vorzugsweise die Wickelachse mit der Kolonnenachse 16 zusammenfällt. Auch hier ist zu berücksichtigen, daß die Kämme mit der Kolonnenachse einen Winkel zwischen 30 und 90° bilden.

## Ansprüche

1. Einbauelement für eine Stoff- und Wärmeaustauschkolonne mit mindestens einer zick-zack-förmigen Lage aus aneinander angrenzenden und in zweierlei Vorzugsrichtungen geneigten Leitflächen, bei dem die Lage aus Grundelementen zusammengesetzt ist, die sich oberhalb und unterhalb der Mittelebene der Lage erstrecken, dadurch gekennzeichnet, daß jedes Grundelement mit drei ihm benachbarten Grundelementen verbunden ist, von denen eines dieselbe Vorzugsrichtung wie das Grundelement, die beiden anderen die andere Vorzugsrichtung aufweisen, und daß die Grundelemente, die in Richtung des Kammverlaufs der Zick-Zack-Anordnung nebeneinander liegen, jeweils unterschiedliche Vorzugsrichtungen aufweisen.

2. Einbauelement nach Anspruch 1, dadurch gekennzeichnet, daß die Grundelemente zwischen 30 und 60° gegenüber der Mittelebene der Lage geneigt sind.

3. Einbauelement nach Anspruch 1 oder 2, dadurch gekennzeichnet, daß die Lage parallel zur Achse der Kolonne angeordnet ist und die Kämme der Zick-Zack-Anordnung zwischen 30 und 90° gegenüber der Achse

EP 0 372 003 B1

geneigt sind.

4. Einbauelement nach einem der Ansprüche 1 bis 3, dadurch gekennzeichnet, daß die Lage spiralförmig gewickelt ist.

5. Einbauelement nach einem der Ansprüche 1 bis 4, dadurch gekennzeichnet, daß jedes Grundelement von 6 Nachbargrundelementen umgeben ist.

6. Einbauelement nach einem der Ansprüche 1 bis 5, dadurch gekennzeichnet, daß senkrecht zum Kammverlauf nebeneinanderliegende Grundelemente um eine halbe Länge gegeneinander versetzt sind.

7. Einbauelement nach einem der Ansprüche 1 bis 4, dadurch gekennzeichnet, daß jedes Grundelement von 5 Nachbargrundelementen umgeben ist.

8. Einbauelement nach einem der Ansprüche 1 bis 7, dadurch gekennzeichnet, daß zumindest ein Teil der Grundelemente eine von seiner Oberfläche vorspringendes Dach aufweist.

9. Einbauelement nach Anspruch 8, dadurch gekennzeichnet, daß das Dach sich über die gesamte Breite eines Grundelements erstreckt.

10. Einbauelement nach Anspruch 8 oder 9, dadurch gekennzeichnet, daß das Dach in eine der beiden Vorzugsrichtungen weist.

11. Einbauelement nach einem der Ansprüche 8 bis 10, dadurch gekennzeichnet, daß das Dach eine rechteckige Grundfläche besitzt.

12. Einbauelement nach einem der Ansprüche 8 bis 11, dadurch gekennzeichnet, daß senkrecht zum Kammverlauf abwechselnd jeweils eine Reihe von Grundelementen mit Dächern und eine Reihe von Grundelementen ohne Dächer vorgesehen ist.

13. Einbauelement nach einem Der Ansprüche 8 bis 12, dadurch gekennzeichnet, daß das Dach sich über mehr als die halbe Länge eines Grundelements erstreckt.

14. Einbauelement nach einem der Ansprüche 8 bis 12, dadurch gekennzeichnet, daß das Dach sich über weniger als die halbe Länge eines Grundelements erstreckt und asymmetrisch auf dem Grundelement angeordnet ist.


## Claims

1. A packing element for a mass and heat exchanging column comprising at least one zig-zag-shaped layer of mutually adjacent guide surfaces which are inclined in two different preferred directions, wherein the layer is composed of basic elements which extend above and below the central plane of the layer, characterised in that each basic element is connected to three basic elements adjacent to itself, whereby one of these adjacent basic elements presents the same preferred direction as the first mentioned basic element and the two others present the other preferred direction, and that basic elements which are arranged one beside another in the direction of the combs of the zig-zag arrangement present different respective preferred directions.

2. A packing element as claimed in Claim 1, characterised in that the basic elements are inclined at an angle of between 30 and 60° relative to the central plane of the layer.

3. A packing element as claimed in Claim 1 or 2, characterised in that the layer is arranged in parallel to the axis of the column, and the combs of the zig-zag arrangement are inclined at an angle of between 30 and 90° in relation to the axis.

4. A packing element as claimed in one of Claims 1 to 3, characterised in that the layer is wound in a spiral fashion.

5. A packing element as claimed in one of Claims 1 to 4, characterised in that each basic element is surrounded by six adjacent basic elements.

6. A packing element as claimed in one of Claims 1 to 5, characterised in that basic elements arranged one beside another at right angles to the direction of the combs are mutually offset by a half length.

7. A packing element as claimed in one of Claims 1 to 4, characterised in that each basic element is surrounded by five adjacent basic elements.

8. A packing element as claimed in one of Claims 1 to 7, characterised in that at least a part of the basic elements are provided with a roof projecting from their surface.

9. A packing element as claimed in Claim 8, characterised in that the roof extends along the entire breadth of a basic element.

10. A packing element as claimed in Claim 8 or 9, characterised in that the roof faces in one of the two preferred directions.

11. A packing element as claimed in one of Claims 8 to 10, characterised in that the roof has a rectangular basic shape.

12. A packing element as claimed in one of Claims 8 to 11, characterised in that at right angles to the direc-

5

tion of the combs, a row of basic elements with roofs and a row of basic elements without roofs are arranged in alternation.

13. A packing element as claimed in one of Claims 8 to 12, characterised in that the roof extends over more than half the length of a basic element.

14. A packing element as claimed in one of Claims 8 to 12, characterised in that the roof extends over less than half the length of a basic element and is arranged asymmetrically on the basic element.

## Revendications

1. Elément à monter pour une colonne d'échange de chaleur et de matières comportant au moins une couche en zig-zag de surfaces de guidage délimitées l'une par rapport à l'autre et inclinées selon deux directions préférentielles, dans lequel la couche est assemblée à partir d'éléments de base qui s'étendent au-dessus et au-dessous du plan médian de la couche, caractérisé en ce que chaque élément de base est relié à trois éléments de base qui lui sont adjacents, l'un de ces éléments présentant la même direction préférentielle que l'élément de base tandis que les deux autres présentent l'autre direction préférentielle, et en ce que les éléments de base qui se trouvent placés les uns à côté des autres dans la direction du tracé en crête de l'agencement en zig-zag, présentent chacun des directions préférentielles différentes.

2. Elément à monter selon la revendication 1, caractérisé en ce que les éléments de base sont inclinés entre 30 et 60° par rapport au plan médian de la couche.

3. Elément à monter selon la revendication 1 ou 2, caractérisé en ce que la couche est disposée parallèlement à l'axe de la colonne et les crêtes de l'agencement en zig-zag sont inclinées de 30° à 90° par rapport à l'axe.

4. Elément à monter selon l'une des revendications 1 à 3, caractérisé en ce que la couche est bobinée en forme de spirale.

5. Elément à monter selon l'une des revendications 1 à 4, caractérisé en ce que chaque élément de base est entouré par six éléments de base voisins.

6. Elément à monter selon l'une des revendications 1 à 5, caractérisé en ce que, perpendiculairement au tracé des crêtes, les éléments de base situés les uns à côtés des autres sont décalés d'une demi-longueur les uns par rapport aux autres.

7. Elément à monter selon l'une des revendications 1 à 4, caractérisé en ce que chaque élément de base est entouré de cinq éléments de base voisins.

8. Elément à monter selon l'une des revendications 1 à 7, caractérisé en ce qu'au moins une partie des éléments de base comporte un toit faisant saillie de sa surface supérieure.

9. Elément à monter selon la revendication 8, caractérisé en ce que le toit s'étend sur toute la largeur d'un élément de base.

10. Elément à monter selon la revendication 8 ou 9, caractérisé en ce que le toit est placé selon l'une des deux directions préférentielles.

11. Elément à monter selon l'une des revendications 8 à 10, caractérisé en ce que le toit comporte une surface de base à angle droit.

12. Elément à monter selon l'une des revendications 8 à 11, caractérisé en ce que, perpendiculairement au tracé de crête, sont prévus alternativement chaque fois une rangée d'éléments de base munis de toits et une rangée d'éléments de base sans toit.

13. Elément à monter selon l'une des revendications 8 à 12, caractérisé en ce que le toit s'étend sur plus de la moitié de la longueur d'un élément de base.

14. Elément à monter selon l'une des revendications 8 à 12, caractérisé en ce que le toit s'étend sur moins de la moitié de la longueur d'un élément de base et est disposé de façon asymétrique sur l'élément de base.

Fig. 1

Fig. 2

Fig. 3

Fig. 4

Fig. 5

Fig. 6

15

16

14

2

Fig. 7